(19)

Europäisches
Patentamt
European
Patent Office
Office européen
des brevets

(11) **EP 4 668 894 A1**

(12) **EUROPEAN PATENT APPLICATION**
published in accordance with Art. 153(4) EPC

(43) Date of publication:
**24.12.2025 Bulletin 2025/52**

(21) Application number: **24757323.1**

(22) Date of filing: **16.02.2024**

(51) International Patent Classification (IPC):
**H04W 52/02** *(2009.01)* **H04W 24/08** *(2009.01)*

(52) Cooperative Patent Classification (CPC):
**H04W 24/08; H04W 52/02**

(86) International application number:
**PCT/KR2024/095317**

(87) International publication number:
**WO 2024/172606 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230021037**

(71) Applicant: **LG Electronics Inc.**
**Yeongdeungpo-gu**
**Seoul 07336 (KR)**

(72) Inventors:
• **LEE, Sunghoon**
**Seoul 06772 (KR)**

• **LEE, Youngdae**
**Seoul 06772 (KR)**
• **KIM, Jaehyung**
**Seoul 06772 (KR)**
• **YANG, Suckchel**
**Seoul 06772 (KR)**
• **CHOI, Seunghwan**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING OR RECEIVING WIRELESS SIGNAL IN WIRELESS COMMUNICATION SYSTEM**

(57) A method of measuring a signal by a terminal in a wireless communication system according to an embodiment of the present disclosure may comprise: performing a second type radio resource management (RRM) measurement in a second mode in which only a second type signal among a first type signal and the second type signal is supported; switching from the second mode to a first mode in which the first type signal is supported, on the basis of the second type RRM measurement; and performing a first type RRM measurement in the first mode, wherein on the basis that the result of the second type RRM measurement has a value smaller than a threshold value, the second mode is switched to the first mode.

**FIG. 14**

Perform second type RRM measurement in second mode — B05

Switch from second mode to first mode based on second type RRM measurement — B10

Perform first type RRM measurement in first mode — B15

EP 4 668 894 A1

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method and apparatus for transmitting or receiving a signal more accurately and efficiently in a wireless communication system.

Other technical objects may be derived from embodiments disclosed in the detailed description.

### TECHNICAL SOLUTION

In an aspect of the present disclosure, provided herein is a method of measuring signals by a user equipment (UE) in a wireless communication system. The method includes: performing second type radio resource management (RRM) measurement in a second mode that supports only a second type signal among a first type signal and the second type signal; based on the second type RRM measurement, switching from the second mode to a first mode that supports the first type signal; and performing first type RRM measurement in the first mode. Based on that a result of the second type RRM measurement is lower than a threshold, the switching from the second mode to the first mode may be performed.

The second type RRM measurement may be performed periodically. Based on the periodically performed second type RRM measurement, the first type RRM measurement may be deactivated, or a periodicity of the first type RRM measurement may be increased.

The first type RRM measurement and the second type RRM measurement may be performed on different signals.

The second type RRM measurement may be performed based on a wake-up signal (WUS) provided as the second type signal.

Based on that a number of occasions for the second type RRM measurement is set to be smaller than a specific value, the switching from the second mode to the first mode may be performed.

A measurement result value may be calculated based on a combination of the result of the second type RRM measurement and a result of the first type RRM measurement.

Both the first type RRM measurement and the second type RRM measurement may be performed in the first mode.

The first type signal may be an orthogonal frequency division multiplexing (OFDM)-based signal, and the second type signal may be a non-OFDM-based signal.

In another aspect of the present disclosure, provided herein is a computer-readable recording medium having recorded thereon a program for performing the aforementioned method.

In another aspect of the present disclosure, provided herein is a device for wireless communication. The device includes: a memory configured to store instructions; and a processor configured to perform operations by executing the instructions. The operations of the processor include: performing second type RRM measurement in a second mode that supports only a second type signal among a first type signal and the second type signal; based on the second type RRM measurement, switching from the second mode to a first mode that supports the first type signal; and performing first type RRM measurement in the first mode. Based on that a result of the second type RRM measurement is lower than a threshold, the switching from the second mode to the first mode may be performed.

The device may further include: a main radio (MR) receiver configured to receive the first type signal; and a low-

2

power wake-up radio (LP-WUR) receiver configured to receive the second type signal.

The device may be a UE operating in a wireless communication system or a processing device configured to control the UE.

In another aspect of the present disclosure, provided herein is a method performed by a base station (BS) in a wireless communication system. The method includes: transmitting a first type signal and a second type signal separately based on each periodicity; receiving information regarding a second type RRM measurement from a UE operating in a second mode that supports only the second type signal; and receiving information regarding a first type RRM measurement from the UE after the UE switches from the second mode to a first mode that supports the first type signal. Based on that a result of the second type RRM measurement is lower than a threshold, the BS may determine that the UE switches from the second mode to the first mode.

In a further aspect of the present disclosure, provided herein is a BS for wireless communication. The BS includes: a memory configured to store instructions; and a processor configured to perform operations by executing the instructions. The operations of the processor include: transmitting a first type signal and a second type signal separately based on each periodicity; receiving information regarding a second type RRM measurement from a UE operating in a second mode that supports only the second type signal; and receiving information regarding a first type RRM measurement from the UE after the UE switches from the second mode to a first mode that supports the first type signal. Based on that a result of the second type RRM measurement is lower than a threshold, the processor may be configured to determine that the UE switches from the second mode to the first mode.

**ADVANTAGEOUS EFFECTS**

According to an embodiment, a signal may be transmitted/received more accurately and more efficiently in a wireless communication system.

Other technical effects may be derived from embodiments disclosed in the detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating a discontinuous reception (DRX) related operation.

FIG. 11 is a diagram illustrating a wake-up signal (WUS).

FIG. 12 illustrates receiver type switching for transitioning between radio resource management (RRM) measurement of a low-power receiver (LR) and RRM measurement of a main receiver (MR) according to an embodiment.

FIG. 13 is a diagram for explaining operations of a network and user equipment (UE) related to RRM measurement in a wireless communication system according to an embodiment.

FIG. 14 is a diagram for explaining operations of a UE according to an embodiment.

FIG. 15 is a diagram for explaining operations of a base station (BS) according to an embodiment.

FIGS. 16 to 19 illustrate an example of a communication system 1 and wireless devices applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

The term "base station" used in this specification may be replaced with terms such as a fixed station, Node B, gNode B (gNB), access point (AP), cell, or transmission and reception point (TRP). The term "relay" may be replaced with terms such as a relay node (RN) or relay station. In addition, the term "terminal" may be replaced with terms such as a user equipment (UE), mobile station (MS), mobile subscriber station (MSS), or subscriber station (SS).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.


3GPP LTE


- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol


Terms and Abbreviations


- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space

- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission
- LP-WUS: Low Power Wake-Up Signal
- XR: Abbreviation for eXtended Reality. VR(virtual reality), AR(augmented reality), MR(mixed reality)
- RRM : Radio Resource Management

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

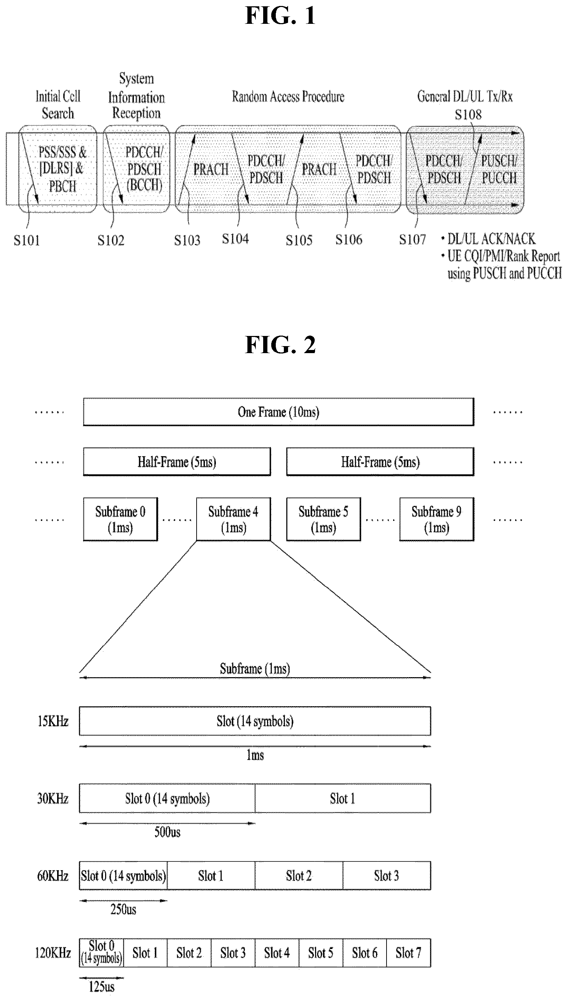

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

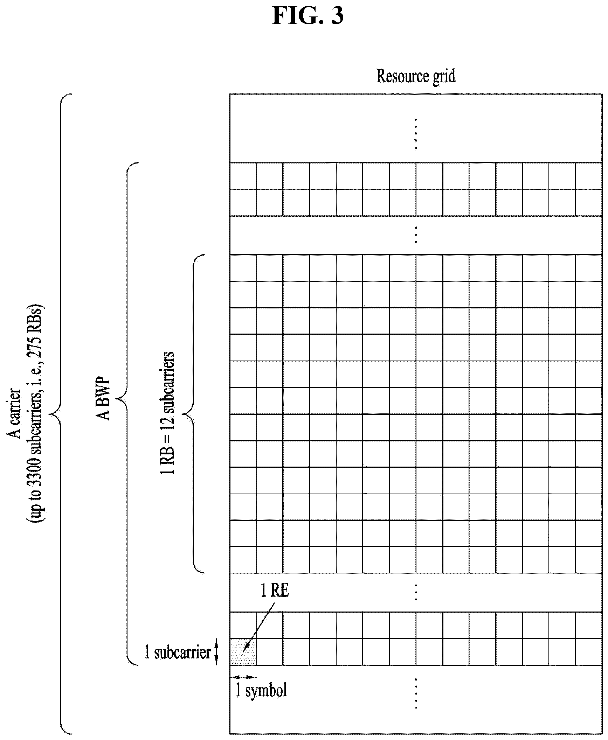

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

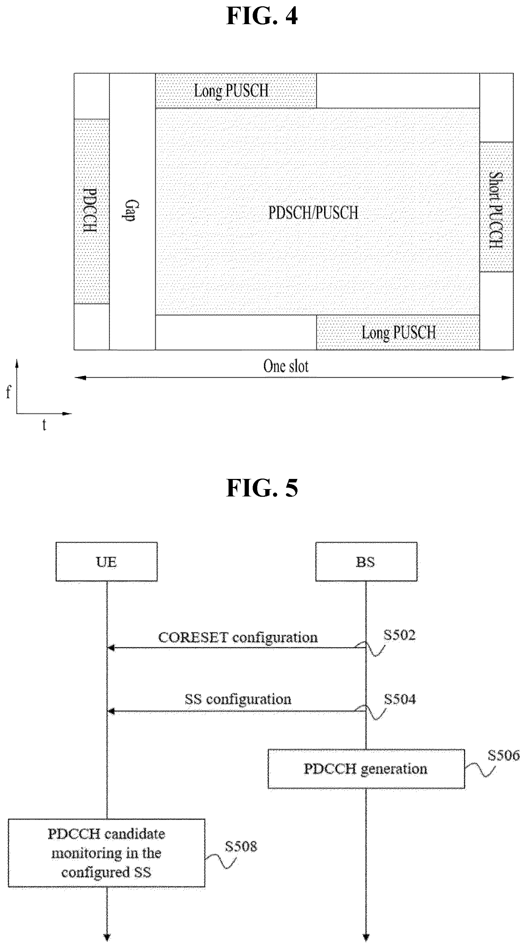

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

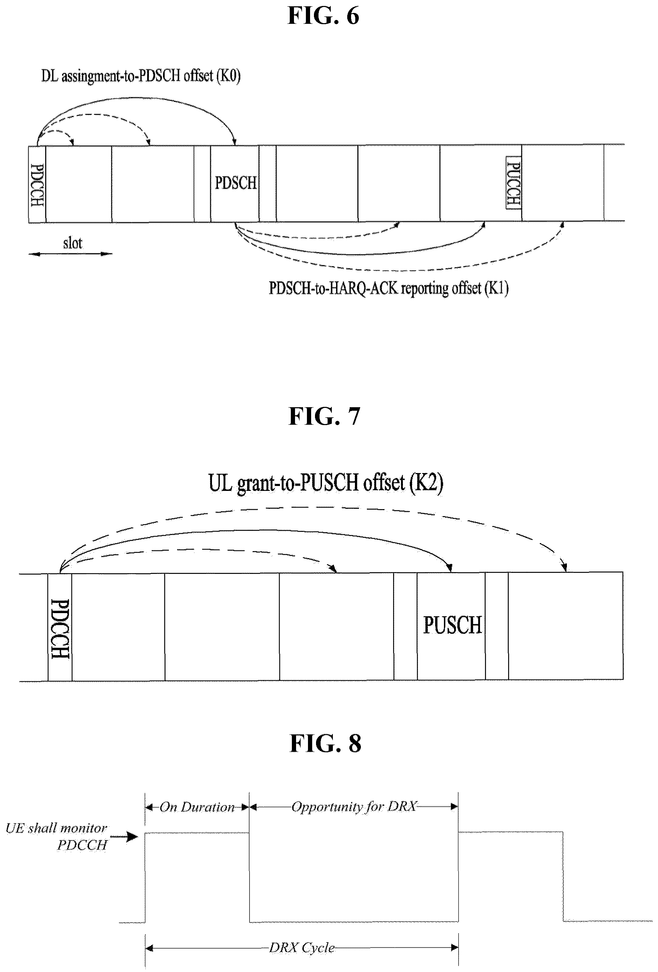

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod T = (T \text{ div } N)*(\text{UE\_ID} \bmod N)$$

- An index i_s indicating the index of the PO is determined by:

$$i\_s = \text{floor}(\text{UE\_ID}/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods.

[Table 5]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.
Therefore, if DRX is configured, PDCCH monitoring/reception may be performed discontinuously in the time domain in performing the above-described/proposed procedures and/or methods are performed.

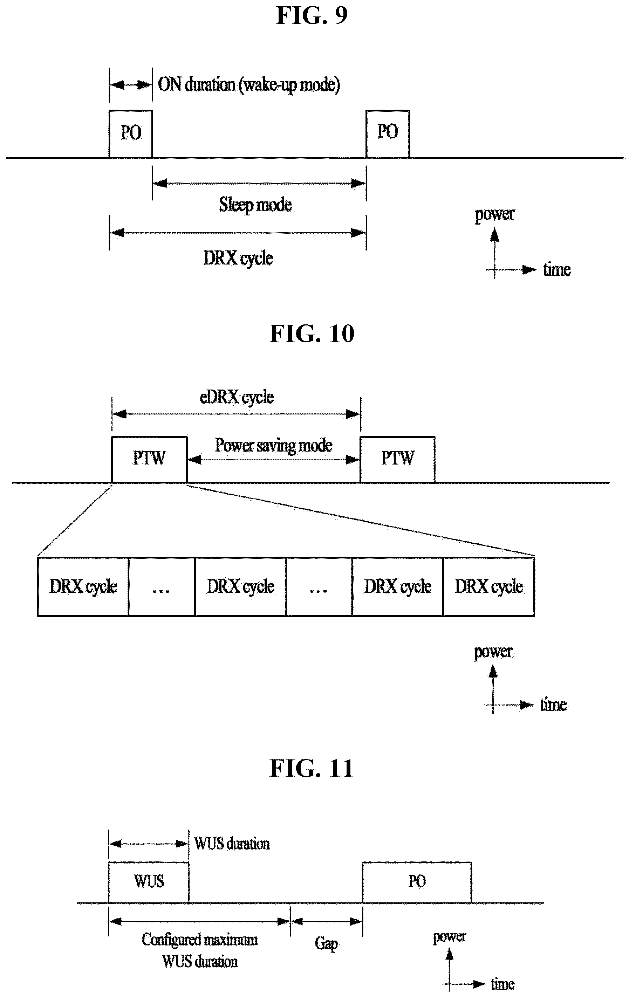

FIG. 9 illustrates an exemplary DRX cycle for paging.
Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.
In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.
FIG. 10 illustrates an extended DRX (eDRX) cycle.
According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

**WUS (Wake-up signal)/PEI (Paging Early Indication)**

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## RRM measurement based on receiver types

In the present disclosure, based on the terminology used in the standardization discussions related to low-power wake-up signal (LP-WUS), a main radio is referred to as an MR, and a low-power wake-up receiver (LP-WUR) is referred to as an LR. The MR and LP-WUR, which receive signals for performing RRM measurement, are referred to as receiver types for distinction.

The MR refers to a general receiver for signal reception at a NR UE, and the MR may be used to receive NR OFDM signals, etc. In other words, the receiver of the UE in the current NR standard may be understood as the MR.

The LP-WUR refers to a receiver that is newly added to the UE to receive low-power signals, and through the LP-WUR, newly designed low-power signals such as an LP-WUS or lower power synchronization signal (LP-SS) may be received. The LP-WUR may have characteristics of lower cost and lower power consumption compared to the MR.

Low-power signals such as the LP-WUS or LP-SS may be configured/transmitted differently in the time/-frequency domain compared to MR signals with an OFDM symbol structure. For example, the LP-WUS may be modulated with on-off keying (OOK) and aligned to the boundary of time resources (e.g., slots or symbols in the time domain), but may be transmitted without alignment to the boundary of frequency resources (e.g., REs or subcarriers in the frequency domain). For example, the LP-WUS may be configured to represent the presence or absence (1/0) of a signal within a specific time duration, and the UE may receive the LP-WUS only through energy detection (or envelope detection) of the LP-WUS within the specific time duration. The OOK symbol of the LP-WUS may be overlaid with i) a sequence for spectrum flattening, ii) an OFDM sequence for increasing transmission coverage, and/or iii) an OFDM sequence for additional information transmission.

The UE needs to perform RRM measurement through the MR at a specific periodicity. If the RRM measurement through the MR is capable of being replaced with RRM measurement based on the LP-WUR, the power consumption of the UE may be significantly reduced. In other words, if the MR is capable of remaining in the power-off (or sleep) state for a longer duration without being activated to perform RRM measurement at a specific periodicity, it may be highly effective in reducing the power consumption of the UE. To meet the battery life requirement of the UE, it may be expected that eDRX with a long cycle is configured. However, in this case, high latency may not be avoided, and thus, it may be unsuitable for services that require both low latency and long battery life. Therefore, the discussion of the LP-WUS may be about an ultra-low power mechanism that satisfies lower latency than eDRX.

The UE in the RRC Idle/Inactive state usually needs to wake up at least once every DRX cycle to receive signals, and this operation contributes significantly to power consumption during periods without signaling or data traffic. If the UE is capable of receiving signals (for example, paging) at a longer period (for example, at every Nth DRX cycle instead of every DRX cycle), power consumption may be significantly reduced. This may be supported by having the LP-WUR, which operates with ultra-low power consumption, replace and perform at least part of signal reception that the MR should carry out. In other words, since the RRM measurement on the LR may consume less power than the RRM measurement on the MR, if at least part of the RRM measurement of the MR is replaced by the RRM measurement of the LR, there may be power saving effects for the UE.

For the discussion on the LP-WUS/LP-WUR, it was agreed to introduce the "ultra-deep sleep" power state of the MR, which is a state of very low power consumption. It was agreed to set the starting point of the discussion as the ultra-deep sleep state having a relative power of 0.015, similar to the power-off state. Table 6 summarizes the discussion of the recent standardization meeting. In this case, the relative power is a relative value where the MR in the deep sleep state is set to 1, and this may be found in TR38.840.

[Table 6]

Take the following power model for MR for evaluation in LP-WUS/WUR SI,
- For IoT and wearable cases, reuse TR38.875 power model as baseline.
- For eMBB and other cases, reuse TR38.840 power model as baseline.
- Introduce '*Ultra-deep sleep*' power state for MR of UEs with LP-WUS receiver
  - FFS: The details of '*Ultra-deep sleep*' power state

- The following power models are used '*Ultra-deep sleep*' power state for MR for evaluation

| Power State | Relative Power (unit) | Ramp-up and down transition energy (Note 1): (unit multiplied by ms) | Ramp-up time | Time for sync/re-sync |
|---|---|---|---|---|
| Ultra-deep sleep | [0.015] | [2000 ~ 40000] <br><br> - Study to converge on candidate numbers to use for evaluation <br> - FFS: other values and reported by companies. <br> - FFS: down-selection of the values, <br> - companies are encouraged to provide details for down-selection | [400ms], FFS: 100ms | X |

Note1:
  - Ramp-up time may consist of the procedure for [MR hardware tune on e.g., boot, memory load and etc.],
  - Time for sync/re-sync consists of the procedure for [MR to re-synchronization with the serving gNB etc.],
    - FFS: X and whether/how to have different values depending on other factors, e.g., signal-to-noise ratio
    - Companies can report the assumption of X in the initial evaluation.
  - Ramp up and down energy includes power for ramp-up and ramp-down. Energy consumption for sync/re-sync is separately calculated.
- The total time for MR transition from ultra-deep sleep to active/micro sleep state is the sum of ramp-up time and time for sync/re-sync.
  - FFS whether/how to define ramp-down time, whether to separately describe the ramp-down energy consumption
Note 2: the power state transitions in this table refer to transitions between ultra deep sleep state and active / micro sleep state.
Note 3: The values inside of '[ ]' are to be used as starting point of future study on LP-WUS

Various scenarios and candidate technologies based on the LP-WUS/LP-WUR are being discussed. The longer the MR remains in the power-off state (or ultra-deep sleep state), the greater the benefit may be in terms of power saving. The UE in the RRC Idle/Inactive state should perform RRM measurement periodically to handle mobility. The RRM measurement is usually defined to be performed at least once every DRX cycle. Therefore, if the UE is capable of performing the RRM measurement based on the MR at a longer periodicity than the current cycle, significant power consumption reduction may be expected. For this purpose, replacement or offloading of the RRM measurement based on the LP-WUS/LP-WUR may be considered.

The present disclosure proposes a method of performing RRM measurement based on the LP-WUR to reduce power consumption caused by RRM measurement of the UE and a method of assisting the MR based on the results of RRM measurement. In addition, the present disclosure proposes configurations, indications, and UE operations based on the LP-WUS and/or LR to reduce the RRM measurement of the MR. In addition, the present disclosure proposes a method for the UE to switch between RRM measurement on the MR and RRM measurement on the LR. The method may be based on the measurement results obtained by each receiver or by explicit indications through separate signals. Furthermore, the present disclosure proposes configurations and UE operations to prevent situations in which, due to the proposals of the present disclosure, the MR of the UE remains inactive for too long and fails to receive group-common DCI that the UE originally needs to receive.

In the following, the description is based on periodic RRM measurement, but the application of the proposed methods is not limited thereto, and the proposed methods may also be applied to all signals that the UE receives with a certain periodicity. Hereinafter, a state in which a signal is not completely received on the MR may mean at least one of the power-off state or the ultra-deep sleep state, and to this end, a certain transition time may be required.

The UE performs RRM measurement for a serving cell at least once every $M1*N1$ DRX cycles. In general, the RRM measurement may involve measuring RSRP and RSRQ for a specific signal (e.g., SSB) and calculating a cell selection RX level, that is, Srxlev, based thereon. Detailed descriptions excerpted from TS38.133 are shown in Table 7 below.

[Table 7]

#### 4.2.2.2 Measurement and evaluation of serving cell

The UE shall measure the SS-RSRP and SS-RSRQ level of the serving cell and evaluate the cell selection criterion S defined in TS 38.304 [1] for the serving cell at least once every $M1*N1$ DRX cycle; where:

$M1=2$ if SMTC periodicity ($T_{SMTC}$) > 20 ms and DRX cycle $\leq$ 0.64 second,

otherwise $M1=1$.

The UE shall filter the SS-RSRP and SS-RSRQ measurements of the serving cell using at least 2 measurements. Within the set of measurements used for the filtering, at least two measurements shall be spaced by, at least DRX cycle/2.

If the UE has evaluated according to Table 4.2.2.2-1 in $N_{serv}$ consecutive DRX cycles that the serving cell does not fulfil the cell selection criterion S, the UE shall initiate the measurements of all neighbour cells indicated by the serving cell, regardless of the measurement rules currently limiting UE measurement activities.

If the UE in RRC_IDLE has not found any new suitable cell based on searches and measurements using the intra-frequency, inter-frequency and inter-RAT information indicated in the system information for 10 s, the UE shall initiate cell selection procedures for the selected PLMN as defined in TS 38.304 [1].

#### Table 4.2.2.2-1: $N_{serv}$

| DRX cycle length [s] | Scaling Factor (N1) | | | $N_{serv}$ [number of DRX cycles] |
| --- | --- | --- | --- | --- |
| | FR1 | FR2-1[No te1] | FR2-2 [Note2] | |
| 0.32 | 1 | 8 | 12 | $M1*N1*4$ |
| 0.64 | | 5 | 8 | $M1*N1*4$ |
| 1.28 | | 4 | 6 | $N1*2$ |
| 2.56 | | 3 | 5 | $N1*2$ |

Note 1: Applies for UE supporting FR2-1 power class 2&3&4. For UE supporting FR2-1 power class 1 or 5, N1 = 8 for all DRX cycle length.

Note 2: Applies for UE supporting FR2-2 power class 2&3. For UE supporting FR2-2 power class 1, N1 = 12 for all DRX cycle length.

For convenience of explanation, it is assumed that the DRX cycle is greater than 0.64 seconds, the SMTC periodicity is less than 20 ms, and FR1 is used (M1=1 and N1=1). Based on these assumptions, the UE may perform RRM measurement every DRX cycle.

In the following, it is assumed that RRM measurement is performed every DRX cycle, but the proposed methods are not limited thereto, and the methods may also be applied to an operation of performing RRM measurement every N1*M1*DRX cycles.

In the following, examples are described based on DRX of the NR system, but the application of the proposed methods is not limited to the NR system or DRX-supported UEs. In the following description, the distinction between methods or options is intended to clarify the explanation, and each method or option should not be construed as being limited to independent implementation. For example, the methods/options described below may be implemented individually, but at least some of the methods/options may also be implemented in combination to the extent that the methods/options do not conflict with each other.

**[Proposal 1] Receiver switching of UE for performing RRM measurement**

Proposed is a method in which the UE switches between RRM measurement on the MR and RRM measurement on the LR. The switching between the MR and the low-power wake-up receiver is simply referred to as receiver switching. In relation to RRM measurement, the measurement for a serving cell (camping cell) and neighboring cells is not separately described, but it may be mainly suitable for application to the measurement for the serving cell.

A UE having no LP-WUS/LP-WUR introduced performs the RRM measurement through the MR at a specific periodicity (e.g., every DRX cycle). If an LP-WUS/LP-WUR is introduced and part or all of the RRM measurement of the MR is replaced with the RRM measurement of the LR, the total power consumption of the UE may be reduced. Accordingly, reference values for using the results of the RRM measurement of the LR, such as cell selection RX level (Srxlev), may also be defined.

To this end, the RRM measurement of the MR and the RRM measurement of the LR may be switched mutually. This may mean that the UE switches from the MR to the LR or from the LR to the MR to perform RRM measurement. Such switching may be performed if the results of RRM measurement obtained by the UE using each receiver (MR or LR) is sufficiently good and the reliability is higher than a threshold.

For example, if the UE is capable of performing RRM measurement with the MR a certain number of times or more, and if the measurement result/reliability is more than a threshold, the UE may determine that the current cell coverage and channel conditions are sufficiently good to perform RRM measurement using the low-power LR. Accordingly, the UE may switch the RRM measurement of the MR to the RRM measurement of the LR.

In addition, if the UE is currently performing RRM measurement with the LR, but if the measurement result/reliability is less than a threshold, the UE may determine that, because the channel conditions are not good, the UE needs to stop the measurement using the low-power LR and switch to the MR to perform the RRM measurement. Even if the UE determines to switch from the LR to the MR, it does not necessarily mean that the total power consumption increases. Since the UE has already performed part of the overall RRM measurement that should be carried out with the MR using the LR, and the switching from the LR to the MR is performed due to issues with the RRM measurement result of the LR, the total power consumption does not increase. In other words, it may be said that the RRM measurement is simply returned to the original state due to issues in the measurement by the LR operating with low power, after power consumption has already been reduced.

Switching based on RRM measurement result

The UE performs RRM measurement on the MR at least once every M1*N1 DRX cycles. In the example, a simple case of M1=1 and N1=1 is assumed.

If the UE determines that the measurement results of the MR exceed a specific threshold (reference value) and the reliability is more than or equal to a specific required level, the UE deactivates the MR (power off or ultra-deep sleep) and performs RRM measurement using the LR. This may be the result of determining that if the RRM measurement result of a currently measured cell is higher than the threshold (even if the measurement accuracy/reliability is not very good), it is acceptable to perform the measurement using the LR, which consumes significantly less power. The specific threshold (reference value) may be predetermined or configured/indicated by a higher layer. In addition, the reference value for the measurement results of the MR and the reference value for the measurement results of the LR may be the same or different, and the reference values may be separately indicated/configured. For example, the reference value for the measurement results of the LR may be determined as a value obtained by multiplying the reference value of the measurement results of the MR by a certain coefficient.

If the UE determines that the measurement results of the LR do not exceed a specific threshold, the reliability is less than a specific required level, or the quality is poor, the UE activates the MR to perform MR RRM measurement. This may be the result of determining that if the measurement accuracy is less than a specific required level due to reasons such as coverage issues or an unstable channel of the currently measured cell, it is difficult to sufficiently trust the LR RRM measurement result, which consumes significantly less power, and therefore the MR RRM measurement should be performed even if it consumes more power.

A criterion for determining the reliability of measurement results may be configured. For example, if the variance of results over N instances of measurement exceeds a certain level, it may be determined that the reliability is insufficient or the quality of the results is poor. Alternatively, if the results over N instances of RRM measurement include more than a certain number of results that do not exceed a threshold, this may also be considered as such a case. As another method, if the measurement results are below a certain ratio compared to the average value of the RRM measurement results of the MR, it may be determined that the reliability or quality is insufficient. This may be useful when the RRM measurement of the MR, which is previously performed, is used or when the UE is not in a situation of cell reselection or mobility.

In other words, the UE may switch the receiver (MR or LR) based on the results of RRM measurement performed with each receiver. In this case, the specific threshold (reference value) for determining switching from the LR to the MR and switching from the MR to the LR may be the same or different.

The specific threshold (reference value) for the UE to determine switching between the MR and LR may need to consider factors such as the coverage difference between the MR and LR, the quality of LR measurement results, and issues caused by the low cost of the LR. Since the LR assumes low-cost and low-power reception, the LR generally consumes less reception power or a received signal has a lower SNR compared to that of the MR. Therefore, assuming the same reception power consumption and SNR, it may be expected that the LR has relatively smaller coverage than the MR. In addition, since the LR is assumed to be implemented at low cost, the quality and reliability of measurement results may be lower than those of the MR when measuring signals. For this reason, because there may be differences between the two receivers, thresholds serving as the basis for switching may be determined by reflecting the differences.

If it is determined that the results of RRM measurement performed not only by the LR but also by the MR will have poor quality because the UE is located at the cell edge, switching may be determined based on compensation for the results. In other words, if the UE is performing RRM measurement with the LR but it is expected that even switching to the MR for RRM measurement will still result in poor measurement quality, immediate switching may not improve the RRM measurement results and may be disadvantageous in terms of power consumption. Such compensation may be determined in the form of an offset based on the recent measurement result quality of the LR and MR. If the recent measurement result quality of both the LR and MR is below each threshold, which may be due to poor coverage or channel conditions, the UE may apply an offset to the specific threshold for determining switching of the LR and configure a new reference value.

An operation of notifying the BS of the actual switching status of the UE may be included. The switching status may be directly provided through UL transmission. Alternatively, RRM measurement results below the reference value, which are the basis for determining the switching, may be reported. Alternatively, it may be an operation in which the UE informs the BS of the quality of RRM measurement results performed using the LR or MR.

Switching based on transmission periodicity or frequency of signals where RRM measurement is capable of being performed

The UE may switch to a receiver for performing RRM measurement based on the transmission periodicity or frequency of signals where the UE is capable of performing measurement based on the transmitted LP-WUS or the LR. The LP-SS may be considered as a signal that may be received using the LR, which refers to an additional synchronization signal for receiving the LP-WUS with the LR. For example, if the UE is performing the RRM measurement using the MR and there are more than a certain number of occasions where the reception of the LP-WUS may be expected during a specific time period, the UE may switch to the LR and then perform the RRM measurement. In this case, the specific threshold described above may be used as an auxiliary metric for determining whether to switch to the LR. This may be the result of determining that if there are sufficiently many signals available to perform the RRM measurement using the LR while the UE is performing the RRM measurement using the MR, sufficient measurement results and reliability may be secured (compared to when the RRM measurement is performed with the MR).

On the other hand, if the UE is performing the RRM measurement with the LR but the number of occasions where the reception of the LP-WUS may be expected during a specific time period is below a specific threshold, the UE may switch to the MR and then perform the RRM measurement. That is, although the UE is performing the RRM measurement using the LR, if it is determined that there are not enough signals expected to be received via the LR and it is difficult to secure sufficient measurement results and reliability, the UE may determine to activate the MR to perform the RRM measurement.

The transmission periodicity or frequency of the LP-WUS may be based on the DRX cycle of the MR configured for the UE. Assuming that a periodicity where the UE configured with no LP-WUS/LP-WUR needs to perform the MR RRM measurement is the DRX cycle, the UE may determine whether to switch to the LR to perform the RRM measurement according to the ratio of LP-WUS transmission relative to the DRX cycle. For example, if it is expected that the LP-WUS will be transmitted N or more times within one DRX cycle, the UE may perform the LR RRM measurement N times during the time the UE is capable of performing the MR RRM measurement once. Therefore, even if the reliability of measurement results is somewhat insufficient, the accuracy of the measurement results may be improved by performing the LR RRM measurement N times repeatedly.

There may be other synchronization signals (e.g., LP-SS) where the UE is capable of performing the LR RRM measurement, in addition to the LP-WUS. These signals may be transmitted with the same or different periodicities. If the UE is capable of performing the LR RRM measurement for all of the signals, the UE may calculate the frequency of signals available for the LR RRM measurement relative to the DRX cycle of the MR based on the sum of the transmission frequencies of each signal.

If the UE expects that target signals where the UE is capable of performing the RRM measurement using the LR (LP-WUS or LP-SS) will be received more frequently than a certain frequency, the UE may freely determine which one of the LR and MR is to be used for performing the RRM measurement. In other words, if there are enough target signals such that the RRM measurement through the LR does not cause any problems, the UE may perform the measurement using the LR for the purpose of power saving, even though the reliability of the RRM measurement results is relatively lower, or the UE may perform the measurement using the MR to obtain more accurate results, even if it consumes more power. Regardless of which receiver is used for performing the RRM measurement, the cell quality may be determined based on the measurement results.

The UE may determine whether to trigger the MR to wake up based on the measurement results of the LR. As in the RRM measurement of the MR, the RRM measurement of the LR may also be required to be performed at least once every defined measurement periodicity (generally N1*M1*DRX cycles).

An operation of notifying the BS of the actual switching status of the UE may be included. The switching status may be directly provided through UL transmission. Alternatively, it may be an operation in which the UE informs the BS of the quality of RRM measurement results performed using the LR or MR.

Switching based on explicit indication

The UE may perform switching between the MR and LR based on reception of an explicit indication. For example, if the BS requires highly accurate RRM measurement results using the MR for the UE, the BS may indicate the highly accurate RRM measurement results. This may be indicated in the form of higher layer signaling (RRC), DCI, or a MAC CE.

The switching operation based on RRM measurement results and the switching operation based on the transmission frequency of signals available for RRM measurement proposed above may also be performed based on an explicit indication. In this case, the UE may report to the BS the basis for determining whether switching is necessary, and the BS may determine whether to perform the switching based on the report and directly indicate to the UE whether to perform the switching.

[Proposal 2] Hybrid RRM of LR and MR

If the UE is capable of performing RRM measurement using the LR, the UE may perform the RRM measurement using both the LR and MR. A method of performing measurement based on both receivers and using the results together may be considered. In the present disclosure, such a method is referred to as hybrid RRM measurement or hybrid measurement.

The UE performs the RRM measurement by receiving an SSB (or CSI-RS) using the MR, and performs RRM measurement by receiving an LP-WUS or LP-SS using the LR. When each result is referred to as an MR result and an LR result, the two results may be combined or mixed to determine a single final result of the RRM measurement (the result of the hybrid measurement). For example, the final result may be derived as a linear combination of the MR result and the LR result, and the final result may be compared with a linear combination of a reference for the MR result and a reference for the LR result. In other words, the linear combination of Srxlev for the MR and Srxlev for the LR may be compared with the result of the hybrid measurement.

As in the example above, a form such as a weighted sum may be considered to calculate the MR result and the LR result together. The weights for the MR result and the LR result may be the same or different when combining the MR result and the LR result into a single value.

Accordingly, if the periodicity of occasions where reception of the LP-WUS (or LP-SS) is expected is shorter than a threshold, the UE may perform the RRM measurement using both the LR and MR and calculate the results together. Alternatively, after the UE switches from the LR to the MR or from the MR to the LR, the UE may use the previously measured RRM measurement results as auxiliary information to derive more accurate results. For example, if the UE performs the RRM measurement after switching from the LR to the MR, the UE may derive the weighted sum by assigning lower weights to the previous LR results.

Alternatively, the RRM measurement of the MR and LR may be determined by a configured periodicity. To prevent the UE from not performing the MR RRM measurement for a too long duration, the MR may be activated to perform the RRM measurement at a certain periodicity even if there is no switching indication. In such cases, the periodicity may be more relaxed compared to general RRM measurement of the MR. For example, whereas the RRM measurement of the MR is performed every DRX cycle in the prior art, according to the proposed methods, the periodicity may be increased such that the RRM measurement of the MR is performed every N DRX cycles. In addition, this may help to reduce or prevent paging delays and failures caused by other power-saving techniques based on the LP-WUS.

[Proposal 3] Target signals and requirements of RRM measurement according to receiver type

The requirements of RRM measurement may differ depending on the receiver type (MR or LR) that the UE uses to perform the RRM measurement.

If the UE does not support an LP-WUS/LP-WUR, the UE performs the RRM measurement on an SSB using the MR. If the UE supports the LP-WUS/LP-WUR, signals available for the RRM measurement may include the LP-WUS and LP-SS. This may be due to the characteristics of the LR. In addition, the following sequence signals: PSS or SSS in the SSB may also be candidates. In addition to the sequence signals, a CSI-RS, a TRS, and so on, which are generally configured for the UE, may also be used.

The LP-WUS (and LP-SS) that the UE is capable of receiving may be located in correlation with the SSB in the time/frequency domain. This may be intended to facilitate SSB reception after the MR is activated by LP-WUS reception. For example, the LP-WUS (and LP-SS) may be located a few slots or a few milliseconds ahead of the SSB, which is transmitted every periodicity, either in the same frequency range or in a different frequency range.

It is assumed that the UE is capable of performing the RRM measurement on the SSB using both the MR and LR. In this case, the RRM measurement on the SSB using the LR may be limited to part of SSB signals (PSS or SSS) or may cover all the signals. The RRM measurement on the SSB using the LR may depend on the capability of the UE.

The UE may additionally perform the RRM measurement on RSs currently being used (e.g., CSI-RS, TRS, etc.). UE-specific RSs may be configured commonly for multiple UEs. In this case, the RSs may be configured commonly for UEs capable of performing the RRM measurement only with the MR, and the cell quality may be measured through the corresponding RSs. In addition, the RRM measurement on RSs using the LR may be based on the capacity of the UE or be configured by the BS.

If the SSB is used for the RRM measurement with both the MR and LR, different receivers may be used depending on the UE. This may be the result of the capacity of the UE or an indication by the BS. In addition, as described above, if the RRM measurement on the SSB is performed using the LR, the RRM measurement may be performed only on part of the signals (e.g., PSS/SSS rather than the entirety of the SSB). In such cases, the requirements may be configured such that the SSB is measured using the LR more frequently than the requirements for measuring the SSB using the MR (every DRX cycle in the example of Table 6).

## [Proposal 4] UE operation during activation time of MR

If the UE activates the MR, a certain transition time may be required. The transition time may vary depending on whether the power state of the MR is the deep sleep or ultra-deep sleep state, and as shown in Table 6 above, a relatively long time may be required.

During the MR transition time, the UE may perform RRM measurement using the LR and use the results together as the result of hybrid measurement.

Alternatively, when switching from the LR to the MR, if the MR transition time is longer than a threshold, the UE may not perform any operations related to the RRM measurement. This is because, if the transition time is longer than the threshold, the RRM measurement results of the LR may be meaningless for cell quality measurement or may already be outdated.

## [Proposal 5] MR activation for receiving group-common DCI

If the UE keeps the MR deactivated for longer than a predefined/preconfigured time or timer, the UE may fail to receive control information essential for UE operations (e.g., DCI in a group-common PDCCH). To avoid such an issue, an operation in which the MR is mandatorily activated at a certain periodicity may be defined. This may be similar to the operation proposed in Proposal 2 above. The UE activates the MR at a certain periodicity, perform RRM measurement, and receive group-common DCI. Such a periodicity may be configured or indicated by the BS or predetermined, and thus the BS may know in advance when the UE will activate the MR and transmit the DCI accordingly.

Alternatively, a group-common WUS may be defined to activate the MR for receiving the DCI. The group-common WUS may be received by the UE using the LR and may be transmitted in the form of an LP-WUS. Through an indication identifier in the LP-WUS (e.g., a UE ID or UE group (or sub-group) ID carried in the payload of the LP-WUS, or in the form of a separate indicator), which UE (or UEs within a specific group or sub-group) needs to wake up may be defined.

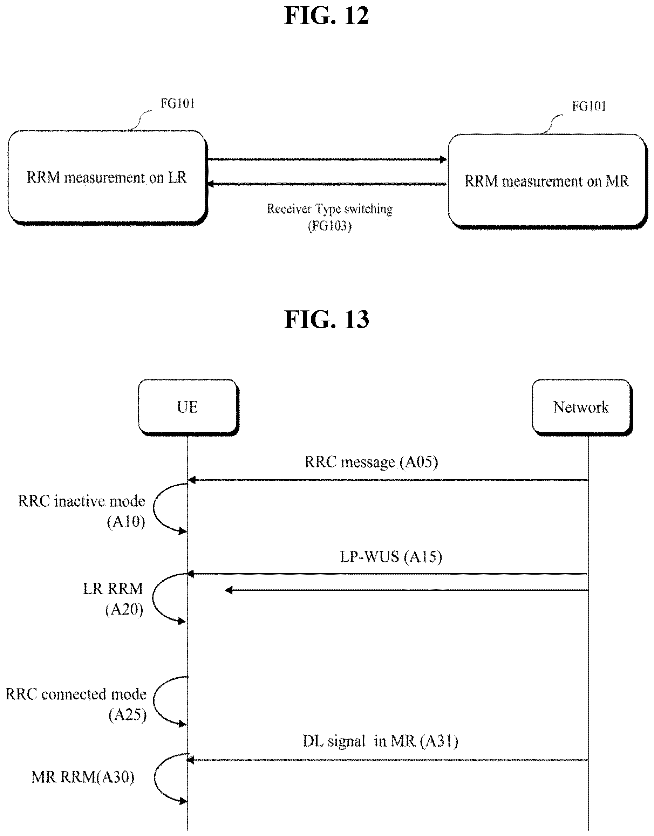

FIG. 12 illustrates receiver type switching for transitioning between LR RRM measurement and MR RRM measurement according to an embodiment.

Referring to FIG. 12, the UE performs RRM measurement using an LP-WUR or MR (FG101 or FG103). The UE may perform the RRM measurement by receiving a signal via either the LP-WUR or MR, and after switching to the other receiver, the UE may perform the RRM measurement by receiving a signal (FG103). The switching operation may be triggered based on the results of the RRM measurement or based on the transmission periodicity or frequency of signals available for the RRM measurement. Alternatively, the switching operation may be triggered by an explicit indication. The UE may repeatedly perform the operation of performing the RRM measurement using one of the two receivers, switching to the other receiver, and then perform the RRM measurement. Accordingly, the UE may select the optimal balance between the quality of RRM measurement results and power consumption reduction.

The UE may perform the RRM measurement by switching between the MR and the LP-WUR. Accordingly, the UE may replace (part of) the RRM measurement performed with the conventional MR or increase the periodicity thereof, thereby significantly reducing power consumption.

FIG. 13 is a diagram for explaining operations of a network and UE related to RRM measurement in a wireless communication system according to an embodiment.

Referring to FIG. 13, the UE may receive an RRC message from the network in the RRC connected mode. The RRC message may indicate that the UE needs to enter the RRC inactive mode (A05).

The UE may enter the RRC inactive mode from the RRC connected mode (A10).

The UE may perform RRM measurement on an LP-WUS (A15) using the LR while the MR is in the sleep/off state (A20).

If the results of the LR RRM measurement do not satisfy a threshold, that is, if conditions required to maintain the RRC inactive mode are not satisfied, the UE may return to the RRC connected mode (A25) and perform MR RRM measurement based on a DL signal (A31) received through the MR (A30).

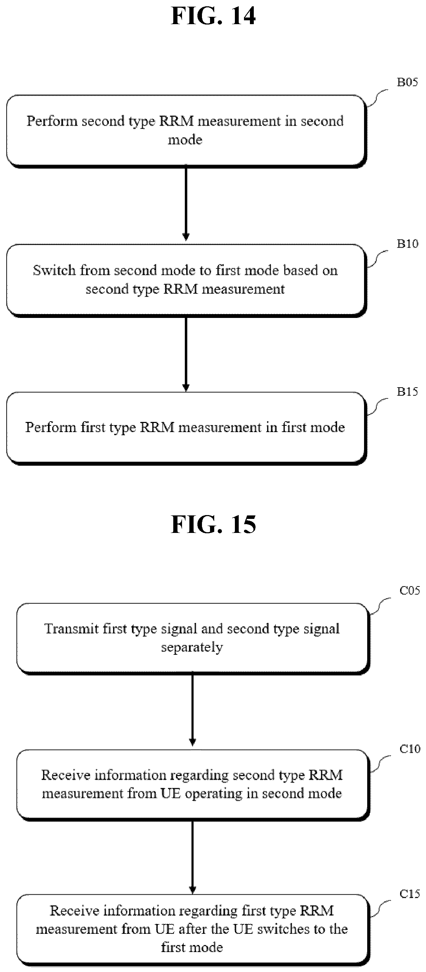

FIG. 14 is a diagram for explaining operations of a UE according to an embodiment.

Referring to FIG. 14, the UE may perform second type RRM measurement in a second mode that supports only a second type signal among a first type signal and the second type signal (B05).

The UE may switch from the second mode to a first mode that supports the first type signal, based on the second type RRM measurement (B10).

The UE may perform first type RRM measurement in the first mode (B15).

Based on that a result of the second type RRM measurement is lower than a threshold, the switching from the second mode to the first mode may be performed.

The second type RRM measurement may be performed periodically. Based on the periodically performed second type RRM measurement, the first type RRM measurement may be deactivated, or a periodicity of the first type RRM measurement may be increased.

The first type RRM measurement and the second type RRM measurement may be performed on different signals.

The second type RRM measurement may be performed based on a WUS provided as the second type signal.

Based on that a number of occasions for the second type RRM measurement is set to be smaller than a specific value, the switching from the second mode to the first mode may be performed.

A measurement result value may be calculated based on a combination of the result of the second type RRM measurement and a result of the first type RRM measurement.

Both the first type RRM measurement and the second type RRM measurement may be performed in the first mode.

The first type signal may be an OFDM-based signal, and the second type signal may be a non-OFDM-based signal.

FIG. 15 is a diagram for explaining operations of a BS according to an embodiment.

Referring to FIG. 15, the BS may transmit a first type signal and a second type signal separately based on each periodicity (C05).

The BS may receive information regarding a second type RRM measurement from a UE operating in a second mode that supports only the second type signal (C10).

The BS may receive information regarding a first type RRM measurement from the UE after the UE switches from the second mode to a first mode that supports the first type signal (C15).

Based on that a result of the second type RRM measurement is lower than a threshold, the BS may determine that the UE switches from the second mode to the first mode.

The BS may configure the UE to perform the second type RRM measurement periodically. Based on the periodically performed second type RRM measurement, the first type RRM measurement may be deactivated, or a periodicity of the first type RRM measurement may be increased.

The first type RRM measurement and the second type RRM measurement may be performed on different signals.

The BS may configure the UE to perform the second type RRM measurement based on a WUS provided as the second type signal.

Based on that a number of occasions for the second type RRM measurement is set to be smaller than a specific value, the BS may determine that the UE switches from the second mode to the first mode.

The BS may receive information regarding a measurement result value combined based on the result of the second type RRM measurement and a result of the first type RRM measurement from the UE.

The BS may configure the UE to perform both the first type RRM measurement and the second type RRM measurement in the first mode.

The first type signal may be an OFDM-based signal, and the second type signal may be a non-OFDM-based signal.

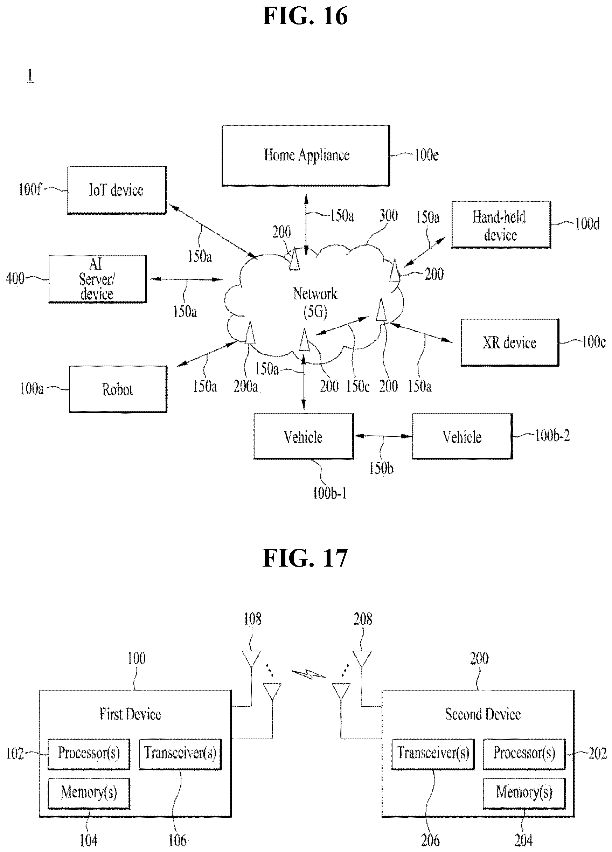

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

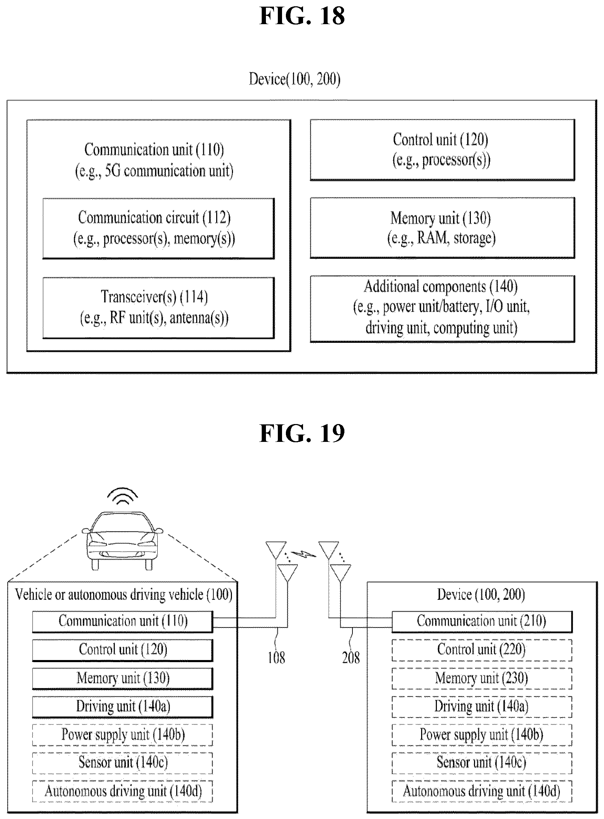

FIG. 18 illustrates another example of a wireless device applied to the present disclosure. The wireless device may be implemented in various forms according to a use-case/service (refer to FIG. 16).

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of measuring signals by a user equipment (UE) in a wireless communication system, the method comprising:

   performing second type radio resource management (RRM) measurement in a second mode that supports only a second type signal among a first type signal and the second type signal;
   based on the second type RRM measurement, switching from the second mode to a first mode that supports the first type signal; and
   performing first type RRM measurement in the first mode,
   wherein the switching from the second mode to the first mode is performed based on that a result of the second type RRM measurement is lower than a threshold.

2. The method of claim 1, wherein the second type RRM measurement is performed periodically, and
   wherein based on the periodically performed second type RRM measurement, the first type RRM measurement is deactivated, or a periodicity of the first type RRM measurement is increased.

3. The method of claim 1, wherein the first type RRM measurement and the second type RRM measurement are performed on different signals.

4. The method of claim 3, wherein the second type RRM measurement is performed based on a wake-up signal (WUS) provided as the second type signal.

5. The method of claim 1, wherein based on that a number of occasions for the second type RRM measurement is set to be smaller than a specific value, the switching from the second mode to the first mode is performed.

6. The method of claim 1, wherein a measurement result value is calculated based on a combination of the result of the second type RRM measurement and a result of the first type RRM measurement.

7. The method of claim 1, wherein, in the first mode, both the first type RRM measurement and the second type RRM measurement are performed.

8. The method of claim 1, wherein the first type signal is an orthogonal frequency division multiplexing (OFDM)-based signal, and
wherein the second type signal is a non-OFDM-based signal.

9. A computer-readable recording medium having recorded thereon a program for executing the method of claim 1.

10. A device for wireless communication, the device comprising:

   a memory configured to store instructions; and
   a processor configured to perform operations by executing the instructions,
   wherein the operations of the processor comprise:

      performing second type radio resource management (RRM) measurement in a second mode that supports only a second type signal among a first type signal and the second type signal;
      based on the second type RRM measurement, switching from the second mode to a first mode that supports the first type signal; and
      performing first type RRM measurement in the first mode,
      wherein the switching from the second mode to the first mode is performed based on that a result of the second type RRM measurement is lower than a threshold.

11. The device of claim 10, further comprising:

   a main radio (MR) receiver configured to receive the first type signal; and
   a low-power wake-up radio (LP-WUR) receiver configured to receive the second type signal.

12. The device of claim 10, wherein the device is a user equipment (UE) operating in a wireless communication system or a processing device configured to control the UE.

13. A method performed by a base station (BS) by a signal in a wireless communication system, the method comprising:

   transmitting a first type signal and a second type signal separately based on each periodicity;
   receiving information regarding a second type radio resource management (RRM) measurement from a user equipment (UE) operating in a second mode that supports only the second type signal; and
   receiving information regarding a first type RRM measurement from the UE after the UE switches from the second mode to a first mode that supports the first type signal,
   wherein based on that a result of the second type RRM measurement is lower than a threshold, the BS determines that the UE switches from the second mode to the first mode.

14. A base station (BS) for wireless communication, the BS comprising:

   a memory configured to store instructions; and
   a processor configured to perform operations by executing the instructions,
   wherein the operations of the processor comprise:

transmitting a first type signal and a second type signal separately based on each periodicity;
receiving information regarding a second type radio resource management (RRM) measurement from a user equipment (UE) operating in a second mode that supports only the second type signal; and
receiving information regarding a first type RRM measurement from the UE after the UE switches from the second mode to a first mode that supports the first type signal,
wherein based on that a result of the second type RRM measurement is lower than a threshold, the processor is configured to determine that the UE switches from the second mode to the first mode.

# FIG. 1

Initial Cell Search — System Information Reception — Random Access Procedure — General DL/UL Tx/Rx S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101  S102  S103  S104  S105  S106  S107

• DL/UL ACK/NACK
• UE CQI/PMI/Rank Report using PUSCH and PUCCH

# FIG. 2

One Frame (10ms)

Half-Frame (5ms)   Half-Frame (5ms)

Subframe 0 (1ms) ...... Subframe 4 (1ms)   Subframe 5 (1ms) ...... Subframe 9 (1ms)

Subframe (1ms)

15KHz | Slot (14 symbols) | 1ms

30KHz | Slot 0 (14 symbols) | Slot 1 | 500us

60KHz | Slot 0 (14 symbols) | Slot 1 | Slot 2 | Slot 3 | 250us

120KHz | Slot 0 (14 symbols) | Slot 1 | Slot 2 | Slot 3 | Slot 4 | Slot 5 | Slot 6 | Slot 7 | 125us

# FIG. 3

Resource grid

A carrier (up to 3300 subcarriers, i. e., 275 RBs)

A BWP

1 RB = 12 subcarriers

1 RE

1 subcarrier

1 symbol

# FIG. 4

# FIG. 5

## FIG. 6

DL assingment-to-PDSCH offset (K0)

| PDCCH | | | | PDSCH | | | | | PUCCH | |

slot

PDSCH-to-HARQ-ACK reporting offset (K1)

## FIG. 7

UL grant-to-PUSCH offset (K2)

| PDCCH | | | | | | PUSCH | | |

## FIG. 8

On Duration — Opportunity for DRX

UE shall monitor PDCCH

DRX Cycle

# FIG. 9

ON duration (wake-up mode)

PO

Sleep mode

DRX cycle

PO

power

time

# FIG. 10

eDRX cycle

PTW

Power saving mode

PTW

| DRX cycle | ... | DRX cycle | ... | DRX cycle | DRX cycle |

power

time

# FIG. 11

WUS duration

WUS

PO

Configured maximum
WUS duration

Gap

power

time

# FIG. 12

RRM measurement on LR ⟷ RRM measurement on MR

FG101      FG101

Receiver Type switching
(FG103)

# FIG. 13

UE      Network

RRC message (A05)

RRC inactive mode (A10)

LP-WUS (A15)

LR RRM (A20)

RRC connected mode (A25)

DL signal in MR (A31)

MR RRM(A30)

# FIG. 14

Perform second type RRM measurement in second mode — B05

Switch from second mode to first mode based on second type RRM measurement — B10

Perform first type RRM measurement in first mode — B15

# FIG. 15

Transmit first type signal and second type signal separately — C05

Receive information regarding second type RRM measurement from UE operating in second mode — C10

Receive information regarding first type RRM measurement from UE after the UE switches to the first mode — C15

# FIG. 16

1

# FIG. 17

# FIG. 18

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 19

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| International application No. |
|---|
| **PCT/KR2024/095317** |

**A.    CLASSIFICATION OF SUBJECT MATTER**

**H04W 52/02**(2009.01)i; **H04W 24/08**(2009.01)i

According to International Patent Classification (IPC) or to both national classification and IPC

**B.    FIELDS SEARCHED**

Minimum documentation searched (classification system followed by classification symbols)

H04W 52/02(2009.01); H04W 24/08(2009.01); H04W 24/10(2009.01); H04W 36/00(2009.01); H04W 48/20(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LP-WUS(low-power wake-up signal), RRM(radio resource management), 측정 (measurement), 모드(mode), 임계치(threshold)

**C.    DOCUMENTS CONSIDERED TO BE RELEVANT**

| Category* | Citation of document, with indication, where appropriate, of the relevant passages | Relevant to claim No. |
|---|---|---|
| Y | ZTE et al. LP-WUS design and related procedure. R1-2211909, 3GPP TSG RAN WG1 #111. Toulouse, France. 07 November 2022.<br>See sections 2.1 and 2.4-2.7. | 1-14 |
| Y | WO 2022-245778 A1 (IDAC HOLDINGS, INC.) 24 November 2022 (2022-11-24)<br>See paragraphs [0109]-[0110], [0113], [0127]-[0135] and [0206]; and figure 4A. | 1-14 |
| Y | INTEL CORPORATION. Discussions on L1 signal design and procedure for low power WUS. R1-2211422, 3GPP TSG RAN WG1 #111. Toulouse, France. 07 November 2022.<br>See section 3.1. | 3-4,8 |
| Y | QUALCOMM INCORPORATED. L1 signal design and procedures for LP-WUR. R1-2212144, 3GPP TSG RAN WG1 #111. Toulouse, France. 07 November 2022.<br>See section 3. | 5 |
| A | US 2022-0053350 A1 (VIVO MOBILE COMMUNICATION CO., LTD.) 17 February 2022 (2022-02-17)<br>See paragraphs [0048]-[0227]; and figures 2-3. | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 May 2024** | **27 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/095317** |

| Patent document cited in search report | | | Publication date (day/month/year) | Patent family member(s) | | | Publication date (day/month/year) |
| --- | --- | --- | --- | --- | --- | --- | --- |
| WO | 2022-245778 | A1 | 24 November 2022 | CN | 117546538 | A | 09 February 2024 |
| | | | | EP | 4342229 | A1 | 27 March 2024 |
| US | 2022-0053350 | A1 | 17 February 2022 | CN | 111615119 | A | 01 September 2020 |
| | | | | CN | 111615119 | B | 08 March 2022 |
| | | | | EP | 3965454 | A1 | 09 March 2022 |
| | | | | KR | 10-2021-0151207 | A | 13 December 2021 |
| | | | | WO | 2020-221302 | A1 | 05 November 2020 |

Form PCT/ISA/210 (patent family annex) (July 2022)